# EUROPEAN PATENT APPLICATION

(11) **EP 4 694 471 A1**
(43) Date of publication of application: **11.02.2026**
(21) Application number: 23929149.5
(22) Date of filing: 27.03.2023
(51) Int. Cl.: H04W 72/121, H04W 52/02

(54) **INFORMATION INDICATION METHOD, APPARATUS AND SYSTEM, AND COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/084207
(87) International publication number: WO 2024/197548

(57) **Abstract**

An information indication method, apparatus and system, and a communication device and a storage medium. The method comprises: receiving first indication information, wherein the first indication information is used for instructing a terminal to expand or not expand a first time, the first time being a valid time for position information acquired by the terminal on the basis of a global navigation satellite system (GNSS). The method can reduce the power consumption of a terminal.

## Description

### TECHNICAL FIELD

The present disclosure relates to the field of wireless communication technology, and in particularly to a method, an apparatus, and a system for indicating information, a communication device and a storage medium.

### BACKGROUND

With the development of wireless communication technology, the satellite communication technology is introduced. A terminal needs to acquire location information to determine timing compensation information of uplink transmission, and the terminal may determine its own location information via a global navigation satellite system (GNSS) measurement module.

### SUMMARY

Embodiments of the present disclosure provide a method, an apparatus, and a system for indicating information, a communication device and a storage medium.

According to a first aspect of embodiments of the present disclosure, a method for indicating information is provided, performed by a terminal, including:
receiving first information,
in which the first information is configured to instruct the terminal to extend or not to extend a first duration, and the first duration is a validity duration of location information acquired by the terminal based on a global navigation satellite system (GNSS).

According to a second aspect of embodiments of the present disclosure, a method for indicating information is provided, performed by a network device, including:
sending first information to a terminal,
in which the first information is configured to instruct a terminal to extend or not to extend a first duration, and the first duration is a validity duration of location information acquired by the terminal based on a GNSS.

According to a third aspect of embodiments of the present disclosure, a method for indicating information is provided, performed by a communication system, including:
sending, by a network device, first information to a terminal,
in which the first information is configured to instruct the terminal to extend or not to extend a first duration, and the first duration is a validity duration of location information acquired by the terminal based on a GNSS.

According to a fourth aspect of embodiments of the present disclosure, a first apparatus for indicating information is provided, including:
a receiving module, configured to receive first information,
in which the first information is configured to instruct a terminal to extend or not to extend a first duration, and the first duration is a validity duration of location information acquired by the terminal based on a GNSS.

According to a fifth aspect of embodiments of the present disclosure, a second apparatus for indicating information is provided, including:
a sending module, configured to send first information,
in which the first information is configured to instruct a terminal to extend or not to extend a first duration, and the first duration is a validity duration of location information acquired by the terminal based on a GNSS.

According to a sixth aspect of embodiments of the present disclosure, a system for indicating information including a terminal and a network device is provided, in which the terminal is configured to implement the method for indicating information of any embodiment of the present disclosure, and the network device is configured to implement the method for indicating information of any embodiment of the present disclosure.

According to a seventh aspect of embodiments of the present disclosure, a communication device is provided, including:
one or more processors,
in which the processors are configured to invoke instructions to cause the communication device to implement the method for indicating information in the first aspect or the second aspect, or the method for indicating information in optional implementations in the first aspect and the second aspect.

According to an eighth aspect of embodiments of the present disclosure, a storage medium for storing computer instructions is provided. When the computer instructions are running on a communication device, the communication device is caused to implement the method for indicating information in the first aspect or the second aspect, or the method for indicating information in optional implementations in the first aspect and the second aspect.

### BRIEF DESCRIPTION OF THE DRAWINGS

In order to clearly illustrate the technical solution in embodiments of the disclosure, the accompanying drawings to be used in embodiments of the disclosure are described below. The following drawings are only some embodiments of the present disclosure, and do not constitute a limitation on the protection scope of the present disclosure.
FIG. 1a is a schematic diagram of an architecture of a system for indicating information according to an embodiment of the present disclosure.
FIG. 1b is a schematic diagram of a scenario of uplink-downlink timing alignment on a base station side according to an embodiment of the present disclosure.
FIG. 1c is a schematic diagram of a scenario of uplink-downlink timing misalignment on a base station side according to an embodiment of the present disclosure.
FIG. 2 is a flowchart of an interaction of a method for indicating information according to an embodiment of the present disclosure.
FIG. 3a is a flowchart of a method for indicating information according to an embodiment of the present disclosure.
FIG. 3b is a flowchart of a method for indicating information according to an embodiment of the present disclosure.
FIG. 3c is a flowchart of a method for indicating information according to an embodiment of the present disclosure.
FIG. 3d is a flowchart of a method for indicating information according to an embodiment of the present disclosure.
FIG. 3e is a flowchart of a method for indicating information according to an embodiment of the present disclosure.
FIG. 4a is a flowchart of a method for indicating information according to an embodiment of the present disclosure.
FIG. 4b is a flowchart of a method for indicating information according to an embodiment of the present disclosure.
FIG. 4c is a flowchart of a method for indicating information according to an embodiment of the present disclosure.
FIG. 5a is a flowchart of a method for indicating information according to an embodiment of the present disclosure.
FIG. 6a is a block diagram of a first apparatus for indicating information according to an embodiment of the present disclosure.
FIG. 6b is a block diagram of a second apparatus for indicating information according to an embodiment of the present disclosure.
FIG. 7a is a block diagram of a communication device according to an embodiment of the present disclosure.
FIG. 7b is a block diagram of a chip according to an embodiment of the present disclosure.

### DETAILED DESCRIPTION

A global navigation satellite system (GNSS) measurement-related process has high power consumption.

Embodiments of the present disclosure provide a method, an apparatus, and a system for indicating information, a communication device and a storage medium.

According to a first aspect, embodiments of the present disclosure provide a method for indicating information, performed by a terminal, including:
receiving first information,
in which the first information is configured to instruct the terminal to extend or not to extend a first duration, and the first duration is a validity duration of location information acquired by the terminal based on a GNSS.

In the above embodiment, the terminal may receive the first information configured to instruct the terminal to extend or not to extend the first duration. After receiving the first duration, the terminal may extend or not to extend the first duration based on the first information. When it is determined to extend the first duration, the first duration may be extended based on the first information. Thus, a count of times the terminal acquires location information may be reduced, thus reducing power consumption of the terminal and extending a battery life of the terminal.

In combination with some embodiments of the first aspect, in some embodiments, the first information indicates a second duration, and the method further includes: in response to determining that the second duration is longer than the first duration, extending the first duration.

In the above embodiment, the terminal may trigger the terminal to extend the first duration when the terminal determines that the second duration indicated by the first information satisfies a condition of being longer than the first duration.

In combination with some embodiments of the first aspect, in some embodiments, extending the first duration includes: extending a first time interval corresponding to the first duration to a second time interval, in which the second time interval includes the first time interval and a third time interval.

In the above embodiment, the second time interval includes the first time interval and the third time interval, in this way, the terminal extends a time range and prolongs the first duration, to prolong the validity duration of the location information acquired by the GNSS.

In combination with some embodiments of the first aspect, in some embodiments, the third time interval is predefined or configured by a network device.

In the above embodiment, the third time interval may be predefined or configured by the network device, so that configuration of the third time interval may be more flexible.

In combination with some embodiments of the first aspect, in some embodiments, the method further includes: receiving second information, in which the second information is configured to indicate the third time interval.

In the above embodiment, the network device may indicate the third time interval via the second information, so that configuration of the third time interval may be more flexible.

In combination with some embodiments of the first aspect, durations corresponding to third time intervals indicated by the second information sent at different time points are different.

In the above embodiment, the durations corresponding to the third time intervals indicated by the second information sent at different time points may differ, so that the network device may dynamically configure different third time intervals via the second information, making configuration of the third time interval more flexible.

In combination with some embodiments of the first aspect, in some embodiments, the method further includes: determining the third time interval based on a first value in the second information and a mapping relationship between the first value and a time interval.

In the above embodiment, the mapping relationship includes a corresponding relationship between the first value and the time interval, thus, after the terminal receives the second information, the terminal may quickly determine the third time interval based on the first value in the second information and the mapping relationship. This explicit indication method may reduce signaling overhead of the second information.

In combination with some embodiments of the first aspect, in some embodiments, the method further includes: receiving a first signaling; and determining the third time interval based on a detection cycle of the first signaling and a mapping relationship between the detection cycle and a time interval.

In the above embodiment, the mapping relationship includes the mapping relationship between the detection cycle and the time interval, thus, after the terminal receives the first signaling, the terminal may quickly determine the third time interval based on the detection cycle of the first signaling and the mapping relationship. This explicit indication method may reduce signaling overhead.

In combination with some embodiments of the first aspect, in some embodiments, the first signaling carries second information, and the second information is configured to indicate the third time interval.

In the above embodiment, the first signaling carries the second information, thus, the terminal may determine the third time interval according to an indication of the second information or based on the detection cycle of the first signaling, to diverse indication ways of the third time interval.

In combination with some embodiments of the first aspect, in some embodiments, the mapping relationship is predefined or configured by the network device.

In the above embodiment, since the mapping relationship may be predefined or configured by the network device, configuration of the mapping relationship may be flexible.

In combination with some embodiments of the first aspect, in some embodiments, receiving the second information includes: receiving the second information via at least one of the following signalings: downlink control information (DCI); or a media access control control element (MAC CE).

In the above embodiment, since the second information may be received via the DCI or the MAC CE. On one hand, existing DCI and/or an existing MAC CE may be reused without setting a new signaling, which may save resources; on the other hand, a method for receiving the second information may be flexible.

In combination with some embodiments of the first aspect, in some embodiments, the method further includes: determining a start time point of the third time interval.

In the above embodiment, after determining the start time point of the third time interval, the terminal may determine a time interval corresponding to an extended first duration.

In combination with some embodiments of the first aspect, in some embodiments, determining the start time point of the third time interval includes: determining the start time point based on an expiration time point at which the first duration expires.

In the above embodiment, since the start time point of the third time interval may be determined based on the expiration time point, location information acquired by the GNSS may remain valid promptly after the first duration expires.

In combination with some embodiments of the first aspect, in some embodiments, determining the start time point based on the expiration time point at which the first duration expires includes: determining the start time point as the expiration time point; or determining the start time point as a time point after a first period from the expiration time point.

In the above embodiment, the expiration time point of the first duration may be determined as the start time point of the third time interval, thus reducing intermittent invalidation of the location information acquired by the GNSS. The start time point may be set as the time point after the first period from the expiration time point, and the first period may be set to different values as needed, making configuration of the start time point flexible.

In combination with some embodiments of the first aspect, in some embodiments, the first period is predefined or configured by a network device.

In the above embodiment, the first period may be predefined or configured by the network device, making configuration of the first period flexible.

In combination with some embodiments of the first aspect, in some embodiments, the method further includes: receiving third information, the third information indicating the start time point, in which determining the start time point of the third time interval includes: determining the start time point of the third time interval based on the third information.

In the above embodiment, the third information may directly indicate the start time point, thus realizing dynamic configuration of the start time point.

In combination with some embodiments of the first aspect, in some embodiments, the method further includes: receiving fourth information; and determining the start time point of the third time interval based on an effective time point of the fourth information.

In the above embodiment, since the start time point of the third time interval may be determined based on the effective time point of the fourth information, the location information acquired by the GNSS may remain valid promptly after the fourth information takes effect.

In combination with some embodiments of the first aspect, in some embodiments, determining the start time point of the third time interval based on the effective time point of the fourth information includes: determining the start time point as a time point after a second period from the effective time point.

In the above embodiment, the start time point may be set as the time point after the second period from the effective time point. The first period may be set to different values as needed, thus making configuration of the start time point flexible.

In combination with some embodiments of the first aspect, in some embodiments, the second period is predefined or configured by a network device.

In the above embodiment, the second period may be predefined or configured by the network device, making a method for configuring flexible.

In combination with some embodiments of the first aspect, in some embodiments, the method further includes: receiving fifth information within the third time interval; and determining a time point to perform a GNSS measurement based on the fifth information.

In the above embodiment, the terminal may determine the time point to perform the GNSS measurement according to an indication of the fifth information.

In combination with some embodiments of the first aspect, in some embodiments, the method further includes: sending sixth information, in which the sixth information is configured to indicate a capability to keep the terminal in a radio resource control (RRC) connected state when it is determined that the first duration expires.

In the above embodiment, a terminal at another side may learn that the terminal has a capability to keep the terminal in the RRC connected state after it is determined that the first duration expires.

In combination with some embodiments of the first aspect, in some embodiments, the method further includes: determining that the first duration expires, and keeping the terminal in an RRC connected state.

In the above embodiment, after it is determined that that the first duration expires, the terminal may be kept in the RRC connected state without switching to an RRC non-connected state, thus reducing power consumption caused by switching back to the RRC connected state to perform the GNSS measurement after switching to the RRC non-connected state, and thus extending a battery life of the terminal.

In combination with some embodiments of the first aspect, the method further includes: receiving seventh information, in which the seventh information is configured to instruct the terminal to keep in the RRC connected state when the terminal determines that the first duration expires.

In the above embodiment, a terminal at another side may instruct the terminal via the seventh information to keep the terminal in the RRC connected state after the terminal determines that the first duration expires, thus enabling the terminal to continue performing the GNSS measurement.

According to a second aspect, embodiments of the present disclosure provide a method for indicating information, performed by a network device, including: sending first information, in which the first information is configured to instruct a terminal to extend or not to extend a first duration, and the first duration is a validity duration of location information acquired by the terminal based on a GNSS.

In combination with some embodiments of the second aspect, in some embodiments, the method further includes: sending second information, in which the second information is configured to indicate a third time interval.

In combination with some embodiments of the second aspect, in some embodiments, durations corresponding to third time intervals indicated by the second information sent at different time points are different.

In combination with some embodiments of the second aspect, in some embodiments, sending the second information includes:
sending the second information via at least one of the following signalings:
DCI; or an MAC CE.

In combination with some embodiments of the second aspect, in some embodiments, the method further includes: sending a first signaling, in which a detection cycle of the first signaling is configured to determine a third time interval.

In combination with some embodiments of the second aspect, in some embodiments, the first signaling carries second information, and the second information is configured to indicate the third time interval.

In combination with some embodiments of the second aspect, in some embodiments, the method further includes:
sending third information, the third information indicating a start time point of the third time interval.

In combination with some embodiments of the second aspect, in some embodiments, the method further includes:
sending fourth information, in which the fourth information is configured to determine a start time point of the third time interval.

In combination with some embodiments of the second aspect, in some embodiments, the method further includes:
sending fifth information within the third time interval, in which the fifth information is configured to determine a time point to perform a GNSS measurement.

In combination with some embodiments of the second aspect, in some embodiments, the method further includes:
receiving sixth information,
**in** which the sixth information is configured to indicate a capability to keep the terminal in an RRC connected state when it is determined that the first duration expires.

In combination with some embodiments of the second aspect, in some embodiments, the method further includes:
sending seventh information,
in which the seventh information is configured to instruct the terminal to keep in the RRC connected state when the terminal determines that the first duration expires.

According to a third aspect, embodiments of the present disclosure provide a method for indicating information, performed by a communication system, including:
sending, by a network device, first information to a terminal,
in which the first information is configured to instruct the terminal to extend or not to extend a first duration, and the first duration is a validity duration of location information acquired by the terminal based on a GNSS.

According to a fourth aspect, embodiments of the present disclosure provide a first apparatus for indicating information, including:
a receiving module, configured to receive first information,
in which the first information is configured to instruct a terminal to extend or not to extend a first duration, and the first duration is a validity duration of location information acquired by the terminal based on a GNSS.

According to a fifth aspect, embodiments of the present disclosure provide a second apparatus for indicating information, including:
a sending module, configured to send first information,
in which the first information is configured to instruct a terminal to extend or not to extend a first duration, and the first duration is a validity duration of location information acquired by the terminal based on a GNSS.

According to a sixth aspect, embodiments of the present disclosure provide a system for indicating information, including a terminal and a network device, in which the terminal is configured to implement the method for indicating information performed by the terminal, and the network device is configured to implement the method for indicating information performed by the network device.

According to a seventh aspect, embodiments of the present disclosure provide a communication device, including:
one or more processors; and
one or more memories for storing instructions,
**in** which the processors are configured to invoke the instructions to cause the communication device to implement the method for indicating information in the first aspect or the second aspect, or the method for indicating information in optional implementations in the first aspect and the second aspect.

According to an eighth aspect, embodiments of the present disclosure provide a program product. When the program product is executed by a communication device, the communication device is caused to implement the method in the first aspect or the second aspect, or the method in optional implementations in the first aspect and the second aspect.

According to a ninth aspect, embodiments of the present disclosure provide a storage medium for storing instructions. When the instructions are running on a communication device, the communication device is caused to implement the method in the first aspect or the second aspect, or the method in optional implementations in the first aspect and the second aspect.

**It** may be understood that the first apparatus, the second apparatus, the communication device, and the storage medium described above are all used to implement the methods provided by embodiments of the present disclosure. Therefore, for beneficial effects they may achieve, reference may be made to beneficial effects in corresponding methods, which are not repeated here.

Embodiments of the present disclosure provide a method, an apparatus, and a system for indicating information, a communication device and a storage medium. In some embodiments, the term "method for indicating information" may be interchangeable with terms such as "method for processing information" or "communication method"; the term "apparatus for indicating information" may be interchangeable with terms such as "apparatus for processing information" or "communication apparatus"; and the term "system for indicating information" may be interchangeable with terms such as "system for processing information" or "communication system".

The embodiments of the present disclosure are not exhaustive and only serve as illustrations of some embodiments, but not as specific limitations to the protection scope of the present disclosure. Without conflict, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

**In** various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

**In** embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In embodiments of the present disclosure, "a plurality of" means two or more.

**In** some embodiments, terms such as "at least one of", "one or more", "a plurality of", "multiple", etc. may be used interchangeably.

Descriptions such as "at least one of A, B, C, ..." or "A and/or B and/or C..." in embodiments of the present disclosure include a case where any one of A, B, C, ... exists independently, and a case where any number of A, B, C, ... combines arbitrarily. Each case may exist independently. For example, "at least one of A, B, C" includes A independently, B independently, C independently, a combination of A and B, a combination of A and C, a combination of B and C, and a combination of A, B, and C. For example, "A and/or B" includes A independently, B independently, and a combination of A and B.

In some embodiments, expressions such as "in a case A, in another case B" and "in response to a case A, in response to another case B" may include the following technical solutions depending on different conditions: performing A regardless of B, i.e., performing A in some embodiments; performing B regardless of A, i.e., performing B in some embodiments; selectively performing A or B, i.e., selectively performing A or B in some embodiments; and performing both A and B, i.e., performing both A and B in some embodiments. The similar principle applies when there are more parts such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", an ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

**In** some embodiments, "including A", "configured to indicate A", or "carrying A" may be interpreted as directly carrying A or indirectly indicating A.

In some embodiments, "time interval" and "period" in the present disclosure may be used interchangeably. In some embodiments, "time point" and "time position" in the present disclosure may be used interchangeably.

**In** some embodiments, terms such as "in response to...", "in response to determining...", "in a case that...", "when...", "if..." etc. may be used interchangeably.

**In** some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably. In some embodiments, "apparatus" may be interpreted as either a physical apparatus or a virtual apparatus. Names are not limited to those recorded in embodiments. The terms such as "apparatus", "equipment", "device", "circuit", "network element", "node", "function", "unit", "section", "system", "network", "chip", "chip system", "entity", "subject", etc. may be used interchangeably.

**In** some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, an access network device, a core network device, or a network device may be replaced by a terminal. For example, embodiments of the present disclosure may also be applied to a structure where communication between the access network device, the core network device, or the network device and the terminal is replaced by communication among a plurality of terminals (e.g., device-to-device (D2D), or vehicle-to-everything (V2X), etc.). In this case, the terminal may be set to have all or part of functions of the access network device. In addition, terms such as "uplink" and "downlink" may be replaced with terms corresponding to inter-terminal communication (e.g., "sidelink"). For example, an uplink channel or a downlink channel may be replaced with a sidelink channel; and an uplink or a downlink may be replaced with a sidelink.

In some embodiments, the terminal may be replaced with the access network device, the core network device, or the network device. In this case, the access network device, the core network device, or the network device may be set to have all or part of functions of the terminal. In some embodiments, names of information and other elements are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

**In** some embodiments, terms such as "uplink", "physical uplink", etc. may be used interchangeably; terms such as "downlink", "physical downlink", etc. may be used interchangeably; and terms such as "sidelink", "sidelink communication", "direct link", "direct communication", etc. may be used interchangeably.

**In** some embodiments, terms such as "downlink control information (DCI)", "downlink (DL) assignment", "DL DCI", "uplink (UL) grant", "UL DCI", etc. may be used interchangeably.

In some embodiments, terms such as "physical downlink shared channel (PDSCH)", "DL data", etc. may be used interchangeably; and terms such as "physical uplink shared channel (PUSCH)", "UL data", etc. may be used interchangeably. In some embodiments, terms such as "radio", "wireless", "radio access network (RAN)", "access network (AN)", "RAN-based", etc. may be used interchangeably.

**In** some embodiments, terms such as "search space", "search space set", "search space configuration", "search space set configuration", "control resource set (CORESET)", "CORESET configuration", etc. may be used interchangeably.

In some embodiments, terms such as "synchronization signal (SS)", "synchronization signal block (SSB)", "reference signal (RS)", "pilot", "pilot signal", etc. may be used interchangeably.

In some embodiments, terms such as "time point", "time", "time position", etc. may be used interchangeably; and terms such as "period", "time interval", "time window", "window", "time", etc. may be used interchangeably.

In some embodiments, terms such as "component carrier (CC)", "cell", "frequency carrier", "carrier frequency", etc. may be used interchangeably.

In some embodiments, terms such as "resource block (RB)", "physical resource block (PRB)", "sub-carrier group (SCG)", "resource element group (REG)", "PRB pair", "RB pair", "resource element (RE)", etc. may be used interchangeably.

In some embodiments, terms such as "wireless access scheme", "waveform", etc. may be used interchangeably.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. may be used interchangeably.

In some embodiments, terms such as "frame", "radio frame", "subframe", "slot", "sub-slot", "mini-slot", "symbol", "transmission time interval (TTI)", etc. may be used interchangeably.

In some embodiments, "acquire", "obtain", "get", "receive", "transmit", "send and/or receive" may be used interchangeably, and they may be interpreted as receiving from another entity, acquiring from a protocol, obtaining via processing by itself, autonomously implementing, and other meanings.

In some embodiments, terms such as "send", "report", "deliver", "transmit", "send and/or receive" may be used interchangeably.

In some embodiments, "predetermined" or "preset" may be interpreted as pre-defined in a protocol, or performing a preset action by an apparatus.

In some embodiments, determining may be interpreted as estimating, deciding, judging, calculating, computing, processing, deriving, investigating, searching, looking up, retrieving, inquiring, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, assigning, etc., which is not limited to these.

In some embodiments, judging or determining may be performed using a value represented by 1 bit (0 or 1), or by a true value or a false value represented by true or false (boolean), or by numerical comparison (e.g., comparison with a predetermined value), which is not limited to these.

In some embodiments, "network" may be interpreted as a device included in a network (e.g., an access network device, a core network device, etc.).

In some embodiments, "does not expect to receive" may be interpreted as not receiving on a time-domain resource and/or a frequency-domain resource, or as not performing subsequent processing on received data after receiving the data; and "does not expect to send" may be interpreted as not sending, or as sending but not expecting a receiver to respond to content that is sent.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

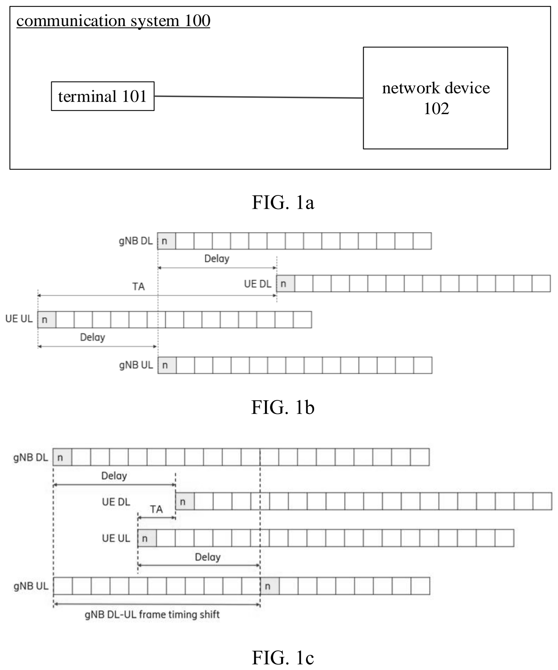

FIG. 1 is a schematic diagram of an architecture of a communication system 100 according to an embodiment of the present disclosure.

As shown in FIG. 1, the communication system 100 may include a terminal 101 and a network device 102.

In some embodiments, the network device 102 may include at least one of an access network device or a core network device.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited to these.

In some embodiments, the access network device 102 is, for example, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited to these.

In some embodiments, the technical solution of the present disclosure may be applied to an architecture of the Open RAN. In this case, an interface between access network devices or within the access network device in embodiments of the present disclosure may become an internal interface of the Open RAN. Processes and information interaction may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited to these.

In some embodiments, the core network device 103 may be a device including one or more network elements, or may be a plurality of devices or device groups, each of which includes all or part of the above one or more network elements. The network elements may be virtual or physical. The core network includes, for example, at least one of an evolved packet core (EPC), a 5G core network (5GCN), or a next generation core (NGC).

It may be understood that the communication system in embodiments of the present disclosure is to clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the disclosure is also applicable to similar technical problems.

The following embodiments of the present disclosure may be applied to the communication system 100 shown in FIG. 1a, or to some entities, which are not limited to this. Entities in FIG. 1 are illustrative. The communication system may include all or some of the entities in FIG. 1, or may include other entities not shown in FIG. 1. The entities may be in any number and in any form. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultrawideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

Continuous emergence of new Internet applications such as augmented reality (AR), virtual reality (VR), and vehicle-to-vehicle communication has placed higher demands on wireless communication technologies, driving continuous evolution of the wireless communication technologies so as to meet application requirements. Cellular mobile communication technology is currently in an evolution stage of a new generation of technology. An important feature of the new generation of technology is to support flexible configuration of various service types. Since different service types have different requirements for wireless communication technology, for example, an enhanced mobile broadband (eMBB) service type emphasizes requirements such as a large bandwidth and a high speed; an ultra-reliable and low latency communications (URLLC) service type emphasizes requirements such as high reliability and a low latency; and an massive machine type communication (mMTC) service type emphasizes requirements such as a large connection number. Therefore, a new generation of the wireless communication system requires a flexible and configurable design to support transmission of the plurality of service types.

In research on the wireless communication technologies, satellite communication is considered an important aspect of development of future wireless communication technologies. The satellite communication refers to communication where a radio communication device on the ground uses a satellite as a relay. A satellite communication system consists of a satellite part and a ground part. Characteristics of the satellite communication are: large communication range, communication can be conducted between any two points as long as they are within a coverage of a radio wave emitted by the satellite; and less susceptible to terrestrial disasters (high reliability). As a supplement to a current terrestrial cellular communication system, the satellite communication has the following benefits: extending coverage: for areas currently uncovered or with high coverage costs by the cellular communication system, such as oceans, deserts, and remote mountainous areas, the satellite communication may help to solve communication problems; emergency communication: in extreme situations such as disasters like earthquakes where infrastructures of cellular communication are unavailable, the satellite communication may quickly establish a communication connection; and providing industry applications: for example, for delay-sensitive services with long-distance transmission, the satellite communication may reduce a delay of service transmission. It is foreseeable that in a future wireless communication system, the satellite communication system and the terrestrial cellular communication system may be deeply integrated, truly realizing intelligent connection of things to things.

In some embodiments, in satellite communication scenarios, due to a long signal transmission distance between a transmitter and a receiver, there is a significant delay in data transmission. For transmission with an uplink-downlink relationship, it is determined that the terminal needs to compensate for a propagation delay based on configuration of the base station. Propagation delay compensation may be applied in various operations, such as transmission of a physical uplink shared channel (PUSCH) scheduled by DCI; transmission of a hybrid automatic repeat reQuest (HARQ) feedback information; and transmission of an MAC CE. Reference may be made to FIG. 1b for a scenario of uplink-downlink timing alignment on a base station side; and reference may be made to FIG. 1c for a scenario of uplink-downlink timing misalignment on a base station side.

In some embodiments, the terminal may acquire location information to determine timing compensation information of uplink transmission. The terminal may determine location information of the terminal via a GNSS measurement module. An IoT terminal may not support a simultaneous operation of a cellular module and a GNSS module, and may only support sporadic transmission.

In some embodiments, after the terminal acquires a GNSS measurement result, an available time of the GNSS may be reported to the base station via a GNSS validity duration. In some embodiments, the terminal determines that the available time of the GNSS is the GNSS validity duration reported by the terminal, and the base station does not additionally configure the available time of the GNSS. However, the available time of the GNSS for the terminal may change based on an operation of the base station. The terminal may ensure uplink synchronization based on control of the base station, such as time-frequency synchronization control. In this case, when the terminal performs a GNSS measurement after the validity duration of the GNSS expires, it may cause unnecessary power consumption.

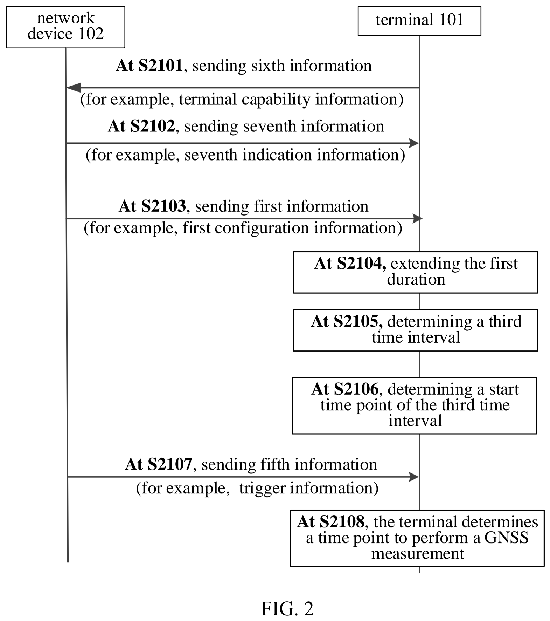

FIG. 2 is a flowchart of an interaction of a method for indicating information according to embodiments of the present disclosure. As shown in FIG. 2, embodiments of the present disclosure relate to a method for indicating information, performed by a system for indicating information 100. The method includes the following steps at S2101 to S2108.

At S2101, a terminal sends sixth information to a network device.

In some embodiments, the network device receives the sixth information sent by the terminal.

In some embodiments, the sixth information is sixth indication information.

In some embodiments, the sixth information may be information indicating a capability of the terminal, for example, terminal capability information.

In some embodiments, the sixth information is configured to indicate a capability to keep the terminal in an RRC connected state when it is determined that a first duration expires.

In some embodiments, the first duration is a validity duration of location information acquired by the terminal based on a GNSS. The first duration may be a first validity duration.

In some embodiments, the sixth information may be carried by a first information field.

For example, when the first information field indicates "1", the sixth information indicates that the terminal has the capability to keep the terminal in the RRC connected state when it is determined that the first duration expires.

In some embodiments, the terminal determines whether the terminal has the capability to keep the terminal in the RRC connected state when it is determined that the first duration expires. If the terminal has the capability, the terminal sends the sixth information to the network device.

In some embodiments, keeping the terminal in the RRC connected state may mean that the terminal does not switch to an RRC idle state or an RRC inactive state. The RRC idle state or the RRC inactive state may also be referred to as an RRC non-connected state.

At S2102, the network device sends seventh information to the terminal.

In some embodiments, the terminal receives the seventh information sent by the network device.

In some embodiments, the seventh information is seventh indication information.

In some embodiments, the seventh information is configured to instruct the terminal to keep the terminal in the RRC connected state when the terminal determines that the first duration expires. The seventh information may be the seventh indication information.

In some embodiments, the seventh information may be carried by a second information field. For example, when the second information field indicates "1", the seventh information instructs the terminal to keep the terminal in the RRC connected state when the terminal determines that the first duration expires.

In some embodiments, the network device may send the seventh information to the terminal based on the sixth information after receiving the sixth information.

In some embodiments, after receiving the sixth information, the network device determines that the terminal has the capability to keep the terminal in the RRC connected state when the terminal determines that the first duration expires, and sends the seventh information to the terminal.

At S2103, the network device sends first information to the terminal.

In some embodiments, the terminal receives the first information sent by the network device.

In some embodiments, the first information is configured to instruct the terminal to extend or not to extend a first duration.

In some embodiments, the first duration is a validity duration of location information acquired by the terminal based on a GNSS.

In some embodiments, the first information may be first indication information or first configuration information.

In some embodiments, the first information indicates a second duration.

In some embodiments, the second duration indicated by the first information is longer than the first duration.

In some embodiments, an end time of the second duration indicated by the first information is after an end time of the first duration.

In some embodiments, if the second duration indicated by the first information is longer than the first duration, or if the end time of the second duration is after the end time of the first duration, the first information is configured to instruct the terminal to extend the first duration.

**In** some embodiments, the network device may send the first information to the terminal based on the sixth information after receiving the sixth information.

In some embodiments, after receiving the sixth information, the network device determines that the terminal has the capability to keep the terminal in the RRC connected state when it is determined that the first duration expires, and sends the first information to the terminal.

At S2104, the terminal extends the first duration.

In some embodiments, the terminal determines that the second duration indicated by the first information is longer than the first duration, and the terminal extends the first duration.

In some embodiments, if the second duration indicated by the first information acquired from the terminal is longer than the first duration, the terminal extends a first time interval corresponding to the first duration to a second time interval. The second time interval includes the first time interval and a third time interval.

In an embodiment, the terminal determines that the end time of the second duration indicated by the first information is after the end time of the first duration, and the terminal extends the first duration.

In some embodiments, if the end time of the second duration indicated by the first information acquired from the terminal is after the end time of the first duration, the first time interval corresponding to the first duration is extended to the second time interval. The second time interval includes the first time interval and the third time interval.

In some embodiments, a time interval (e.g., the first time interval, the second time interval, and the third time interval) may be determined based on a start time and an end time. The start time in the present disclosure may be a start time position.

In some embodiments, the terminal determines the third time interval based on second information, in which the second information may be received from the network device. For example, the terminal determines the third time interval based on a third time interval indicated by the second information.

In some embodiments, the third time interval is configured by the network device. For example, the terminal may receive configuration information from the network device for configuring the third time interval.

In some embodiments, the third time interval is predefined. For example, the third time interval is determined based on a network protocol.

At S2105, the terminal determines a third time interval.

In some embodiments, the second information is configured to indicate the third time interval, and the second information is acquired from the terminal.

In some embodiments, durations corresponding to the third time intervals indicated by the second information sent at different time points are different.

In some embodiments, the terminal receives the second information via at least one of the following signalings: a physical layer signaling; or an upper layer signaling. The physical layer signaling may be a DCI signaling. The upper layer signaling may be an MAC CE signaling or an RRC signaling.

In some embodiments, the terminal determines the third time interval based on a first value in the second information and a mapping relationship between the first value and a time interval.

In some embodiments, the first value may be an indication value.

In an embodiment, the mapping relationship is predefined or configured by the network device.

In some embodiments, the terminal determines the third time interval based on the first value in the second information and the mapping relationship between the first value and the time interval, in which the mapping relationship and the second information may be acquired from the network device. In the present disclosure, "time interval" may be replaced with "time period".

In some embodiments, the configuration information may include information about the mapping relationship between the first value and the time interval. For example, reference may be made to Table 1:

**Table 1:**

| first value | time period information (corresponding to time interval) |
|---|---|
| 00 | time period 1 |
| 01 | time period 2 |
| 10 | time period 3 |
| 11 | reserved |

The above mapping relationship may also be stored in the terminal in advance via a predefined means, or directly specified by a communication protocol, or preconfigured by a user, which is not limited herein.

In some embodiments, the terminal determines the third time interval based on the first value in the second information and the mapping relationship between the first value and the time interval, in which the mapping relationship may be predefined, and the second information may be received from the network device.

In some embodiments, the third time interval is determined based on a detection cycle of the first signaling and a mapping relationship between the detection cycle and a time interval, in which the first signaling may be acquired from the network device. For example, the first signaling may be a target signaling. The target signaling may be a specific signaling determined from a plurality of signalings, such as a signaling carrying time-frequency domain adjustment commands.

In some embodiments, the above mapping relationship is predefined or configured by the network device.

In an embodiment, the first signaling may carry the second information. The first signaling may also carry other information besides the second information, such as information about time-frequency domain adjustment of the terminal.

In some embodiments, the first signaling may be a signaling configured to indicate the time-frequency domain adjustment command for the terminal.

In some embodiments, the third time interval is determined based on the detection cycle of the first signaling and the mapping relationship between the detection cycle and the time interval, in which the first signaling and the mapping relationship may be acquired from the network device.

In some embodiments, the third time interval is determined based on the detection cycle of the first signaling and the mapping relationship between the detection cycle and the time interval, in which the mapping relationship may be predefined, and the first signaling may be acquired from the network device.

At S2106, the terminal determines a start time point of the third time interval.

**In** some embodiments, the terminal determines the start time point of the third time interval based on an expiration time point at which the first duration expires.

In some embodiments, the terminal determines the start time point as the expiration time point of the first duration.

In some embodiments, the terminal determines the start time point as a time point after a first period from the expiration time point.

In some embodiments, the terminal determines the start time point as a time point after a first number of subframes from the expiration time point.

In some embodiments, the first duration is predefined or configured by the network device.

In some embodiments, the terminal determines the first number based on configuration information. The terminal determines the start time point as the time point after the first number of subframes from the expiration time point, in which the configuration information may be acquired from the network device.

In some embodiments, the terminal determines the start time point as the time point after the first number of subframes from the expiration time point, in which the first number is predefined.

In some embodiments, the terminal determines the start time point of the third time interval based on third information, in which the third information may be acquired from the network device, and the third information may indicate the start time point.

In some embodiments, the terminal determines the start time point of the third time interval based on an effective time point of fourth information, in which the fourth information may be acquired from the network device.

In some embodiments, the terminal determines that the start time point of the third time interval is in a time interval after the effective time point of the fourth information, in which the time interval is predefined or configured by the network device, and the fourth information may be acquired from the network device.

In some embodiments, the time interval is determined based on configuration information. The terminal determines that the start time point of the third time interval is in the time interval after the effective time point, in which the configuration information may be acquired from the network device.

In some embodiments, the terminal determines the start time point as the effective time point of the fourth information, in which the fourth information may be acquired from the network device.

In some embodiments, the terminal determines the start time point as a time point after a second period from the effective time point of the fourth information, in which the fourth information may be acquired from the network device.

In some embodiments, the second period is predefined or configured by the network device.

In some embodiments, the terminal determines the start time point as a time point after a second number of subframes from the expiration time point of the fourth information, in which the fourth information may be acquired from the network device.

In an embodiment, the second number is predefined or configured by the network device.

At S2107, the network device sends fifth information to the terminal.

In an embodiment, the fifth information may be trigger information.

In some embodiments, the network device sends the fifth information to the terminal within the third time interval, in which the fifth information indicates a time point to perform a GNSS measurement.

In some embodiments, the fifth information may be carried by a trigger instruction for triggering the GNSS measurement.

At S2108, the terminal determines a time point to perform a GNSS measurement.

In some embodiments, the terminal determines the time point to perform the GNSS measurement based on the fifth information.

In some embodiments, S2102 and S2103 may be performed simultaneously, or either of them may be performed, or an execution order of them may be switched.

In some embodiments, S2104, S2105, and S2106 may be performed in any order or may be performed simultaneously.

In some embodiments, at least one of S2101 to S2108 may be performed, for example, S2101 may be performed independently as an embodiment; S2102 may be performed independently as an embodiment; S2103 may be performed independently as an embodiment; S2104 may be performed independently as an embodiment; S2105 may be performed independently as an embodiment; S2106 may be performed independently as an embodiment; a combination of S2101 and S2102 may be performed independently as an embodiment; a combination of S2101 and S2103 may be performed independently as an embodiment; a combination of S2101 and S2104 may be performed independently as an embodiment; a combination of S2104, S2105, and S2106 may be performed independently as an embodiment; or a combination of S2101, S2104, S2105, and S2106 may be performed independently as an embodiment, which is not limited to these.

In some embodiments, S2101, S2102, S2103, S2105, S2106, S2107, and S2108 are optional. In different embodiments, one or more of these steps may be omitted or substituted.

In some embodiments, S2101, S2102, S2103, S2104, S2106, S2107, and S2108 are optional. In different embodiments, one or more of these steps may be omitted or substituted.

In some embodiments, S2101, S2102, S2103, S2104, S2105, S2107, and S2108 are optional. In different embodiments, one or more of these steps may be omitted or substituted.

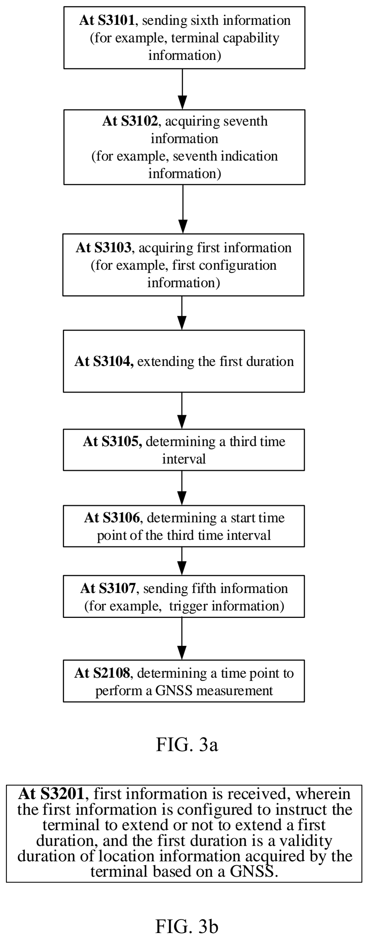

FIG. 3a is a flowchart of a method for indicating information according to an embodiment of the present disclosure. As shown in FIG. 3a, embodiments of the present disclosure relate to a method for indicating information, performed by a terminal. The method includes the following steps at S3101 to S3108.

At S3101, sixth information is sent.

In some embodiments, the sixth information is sent to a network device.

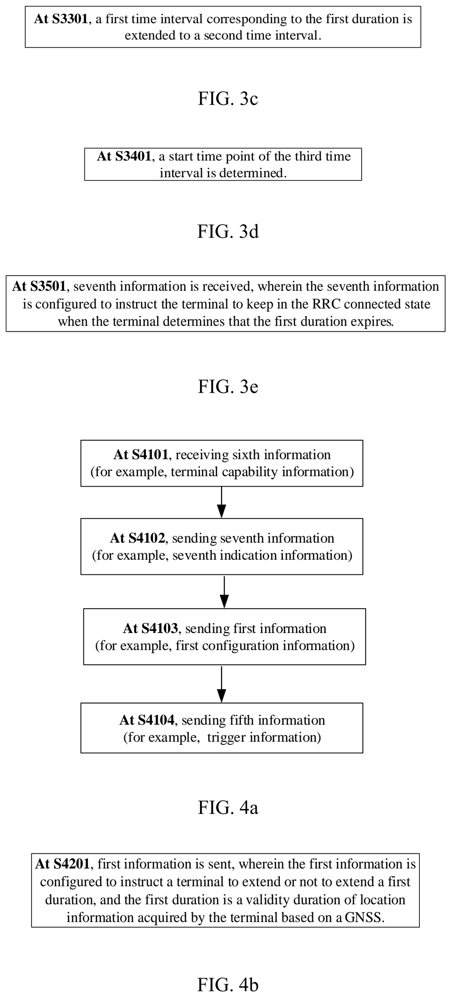

For optional implementations of S3101 reference may be made to optional implementations of S2101 in FIG. 2, and other related parts in embodiments involved in FIG. 3 are not repeated here.

In some implementations, the terminal may send the sixth information to an entity besides the network device.

At S3102, the terminal acquires seventh information.

In some embodiments, the terminal receives the seventh information sent by an access network device.

In some embodiments, the terminal acquires the seventh information specified by a protocol.

In some embodiments, the terminal acquires the seventh information from an upper layer(s).

In some embodiments, the terminal performs processing to obtain the seventh information.

In some implementations, S3102 is omitted, and the terminal autonomously implements a function indicated by the seventh information, or the above function is default or predefined.

For optional implementations of S3102 reference may be made to optional implementations of S2102 in FIG. 2, and the other related parts in embodiments involved in FIG. 2 are not repeated here.

In some implementations, the terminal may also receive the seventh information sent by an entity besides the network device.

At S3103, first information is acquired.

In some embodiments, the first information sent by the network device is received.

In some embodiments, the terminal receives the first information sent by the access network device.

In some embodiments, the terminal acquires the first information specified by a protocol.

In some embodiments, the terminal acquires the first information from an upper layer(s).

In some embodiments, the terminal performs processing to derive the first information.

In some implementations, S3103 is omitted, and the terminal autonomously implements the function indicated by the first information, or the above function is default or predefined.

For optional implementations of S3103 reference may be made to optional implementations of S2103 in FIG. 2, and the other related parts in embodiments involved in FIG. 2 are not repeated here.

In some implementations, the terminal may receive first information sent by an entity besides the network device.

At S3104, a first duration is extended.

For optional implementations of S3104 reference may be made to optional implementations of S2104 in FIG. 2, and the other related parts in embodiments involved in FIG. 2 are not repeated here.

At S3105, a third time interval is determined.

For optional implementations of S3105 reference may be made to optional implementations of S2105 in FIG. 2, and the other related parts in embodiments involved in FIG. 2 are not repeated here.

At S3106, a start time point of the third time interval is determined.

For optional implementations of S3106 reference may be made to optional implementations of S2106 in FIG. 2, and the other related parts in embodiments involved in FIG. 2 are not repeated here.

At S3107, fifth information is acquired.

In some embodiments, the fifth information sent by the network device is received.

In some embodiments, the terminal receives the fifth information sent by the access network device.

In some embodiments, the terminal acquires the fifth information specified by a protocol.

In some embodiments, the terminal acquires the fifth information from an upper layer(s).

In some embodiments, the terminal performs processing to obtain the fifth information.

In some implementations, S3103 is omitted, and the terminal autonomously implements the function indicated by the fifth information, or the above function is default or predefined.

For optional implementations of S3107 reference may be made to optional implementations of S2107 in FIG. 2, and the other related parts in embodiments involved in FIG. 2, which are not repeated here.

In some implementations, the terminal may receive the fifth information sent by an entity besides the network device.

At S3108, a time point to perform a GNSS measurement is determined.

For optional implementations of S3108 reference may be made to optional implementations of S2108 in FIG. 2, and the other related parts in embodiments involved in FIG. 2, which are not repeated here.

In some embodiments, S3102 and S3103 may be performed simultaneously or either of them may be performed.

In some embodiments, S3103, S3104, and S3105 may be performed in any order or may be performed simultaneously.

In embodiments of the present disclosure, at least one of S3101 to S3108 may be performed, for example, S3101 may be performed independently as an embodiment; S3102 may be performed independently as an embodiment; S3103 may be performed independently as an embodiment; S3104 may be performed independently as an embodiment; S3105 may be performed independently as an embodiment; S3106 may be performed independently as an embodiment; a combination of S3101 and S3102 may be performed independently as an embodiment; a combination of S3101 and S3103 may be performed independently as an embodiment; a combination of S3101 and S3104 may be performed independently as an embodiment; a combination of S3104, S3105, and S3106 may be performed independently as an embodiment; or a combination of S3101, S3104, S3105, and S3106 may be performed independently as an embodiment, which is not limited to these.

In some embodiments, S3101, S3102, S3103, S3105, S3106, S3107, and S3108 are optional. In different embodiments, one or more of these steps may be omitted or substituted.

In some embodiments, S3101, S3102, S3103, S3104, S3106, S3107, and S3108 are optional. In different embodiments, one or more of these steps may be omitted or substituted.

In some embodiments, S3101, S3102, S3103, S3104, S3105, S3107, and S3108 are optional. In different embodiments, one or more of these steps may be omitted or substituted.

FIG. 3b is a flowchart of a method for indicating information according to an embodiment of the present disclosure. As shown in FIG. 3b, embodiments of the present disclosure relate to a method for indicating information, performed by a terminal. The method includes the following step S3201.

At S3201, first information is received, in which the first information is configured to instruct the terminal to extend or not to extend a first duration, and the first duration is a validity duration of location information acquired by the terminal based on a GNSS.

In some embodiments, the first information sent by a network device is received, in which the first information is configured to instruct the terminal to extend or not to extend the first duration, and the first duration is the validity duration of the location information acquired by the terminal based on the GNSS.

In some embodiments, the first information sent by the network device is received.

For optional implementations of S3201 reference may be made to the optional implementations of S2102 in FIG. 2, the optional implementations of S3102 in FIG. 3a, and the other related parts in embodiments involved in FIG. 2 and FIG. 3a are not repeated here.

In some implementations, the terminal may also receive first information sent by an entity besides the network device.

In some embodiments, the first information indicates a second duration, and the method further includes:
determining that the second duration is longer than the first duration, and extending the first duration.

In some embodiments, extending the first duration includes:
extending a first time interval corresponding to the first duration to a second time interval,
in which the second time interval includes the first time interval and a third time interval.

In some embodiments, the third time interval is predefined or configured by the network device.

In some embodiments, the method further includes:
receiving second information,
in which the second information is configured to indicate the third time interval.

In some embodiments, durations corresponding to third time intervals indicated by the second information sent at different time points are different.

In some embodiments, the method further includes:
determining the third time interval based on a first value in the second information and a mapping relationship between the first value and a time interval.

In some embodiments, the method further includes:
receiving a first signaling; and
determining the third time interval based on a detection cycle of the first signaling and a mapping relationship between the detection cycle and a time interval.

In some embodiments, the first signaling carries second information, and the second information is configured to indicate the third time interval.

In some embodiments, the mapping relationship is predefined or configured by the network device.

In some embodiments, receiving the second information includes:
receiving the second information via at least one of the following signalings:
DCI;
or an MAC CE.

In some embodiments, the method further includes:
determining a start time point of the third time interval.

In some embodiments, determining the start time point of the third time interval includes:
determining the start time point based on an expiration time point at which the first duration expires.

In some embodiments, determining the start time point based on the expiration time point at which the first duration expires includes:
determining the start time point as the expiration time point;
   or
determining the start time point as a time point after a first period from the expiration time point.

In some embodiments, the first period is predefined or configured by a network device.

In some embodiments, the method further includes:
receiving third information, the third information indicating the start time point,
in which determining the start time point of the third time interval includes:
   determining the start time point of the third time interval based on the third information.

In some embodiments, the method further includes:
receiving fourth information; and
determining the start time point of the third time interval based on an effective time point of the fourth information.

In some embodiments, determining the start time point of the third time interval based on the effective time point of the fourth information includes:
determining the start time point as a time point after a second period from the effective time point.

In some embodiments, the second period is predefined or configured by a network device.

In some embodiments, the method further includes:
receiving fifth information within the third time interval; and
determining a time point to perform a GNSS measurement based on the fifth information.

In some embodiments, the method further includes:
sending sixth information,
in which the sixth information is configured to indicate a capability to keep the terminal in an RRC connected state when it is determined that the first duration expires.

In some embodiments, the method further includes:
determining that the first duration expires, and keeping the terminal in an RRC connected state.

In some embodiments, the method further includes:
receiving seventh information,
in which the seventh information is configured to instruct the terminal to keep in the RRC connected state when the terminal determines that the first duration expires.

The above embodiments may be implemented independently or in combination with each other. The optional implementations may be found in optional implementations of FIG. 2, which is not repeated here.

FIG. 3c is a flowchart of a method for indicating information according to an embodiment of the present disclosure. As shown in FIG. 3c, embodiments of the present disclosure relate to a method for indicating information, performed by a terminal. The method includes the following steps at S3301.

At S3301, a first time interval corresponding to the first duration is extended to a second time interval,
in which the second time interval includes the first time interval and a third time interval.

For optional implementations of S3301 reference may be made to the optional implementations of S2104 in FIG. 2, the optional implementations of S3103 in FIG. 3a, and the other related parts in embodiments involved in FIG. 2 and FIG. 3a are not repeated here.

FIG. 3d is a flowchart of a method for indicating information according to an embodiment of the present disclosure. As shown in FIG. 3d, embodiments of the present disclosure relate to a method for indicating information, performed by a terminal. The method includes the following step at S3401.

At S3401, a start time point of the third time interval is determined.

For optional implementations of S3401 reference may be made to the optional implementations of S2106 in FIG. 2, the optional implementations of S3106 in FIG. 3a, and the other related parts in embodiments involved in FIG. 2 and FIG. 3a are not repeated here.

FIG. 3e is a flowchart of a method for indicating information according to an embodiment of the present disclosure. As shown in FIG. 3e, embodiments of the present disclosure relate to a method for indicating information, performed by a terminal. The method includes the following step at S3501.

At S3501, seventh information is received, in which the seventh information is configured to instruct the terminal to keep in the RRC connected state when the terminal determines that the first duration expires.

In some embodiments, the seventh information sent by a network device is received.

For optional implementations of S3501 reference may be made to the optional implementations of S2102 in FIG. 2, the optional implementations of S3102 in FIG. 3a, and the other related parts in embodiments involved in FIG. 2 and FIG. 3a are not repeated here.

FIG. 4a is a flowchart of a method for indicating information according to an embodiment of the present disclosure. As shown in FIG. 4a, embodiments of the present disclosure relate to a method for indicating information, performed by a network device. The method includes the following steps at S4101 to S4104.

At S4101, sixth information is received.

In some embodiments, the sixth information sent by a terminal is received.

For optional implementations of S4101 reference may be made to the optional implementations of S2101 in FIG. 2, and other related parts in embodiments involved in FIG. 2 are not repeated here.

In some implementations, the network device may receive the sixth information sent by an entity besides the terminal.

At S4102, first information is sent.

In some embodiments, the first information is sent to the terminal.

For optional implementations of S4102 reference may be made to the optional implementations of S2102 in FIG. 2, and the other related parts in embodiments involved in FIG. 2 are not repeated here.

In some implementations, the network device may send the first information to an entity besides the terminal.

At S4103, seventh information is sent.

In some embodiments, the seventh information is sent to the terminal.

For optional implementations of S4103 reference may be made to the optional implementations of S2103 in FIG. 2, and the other related parts in embodiments involved in FIG. 2 are not repeated here.

In some implementations, the network device may send the seventh information to an entity besides the terminal.

At S4104, fifth information is sent.

In some embodiments, the fifth information is sent to the terminal.

For optional implementations of S4104 reference may be made to the optional implementations of S2107 in FIG. 2, and the other related parts in embodiments involved in FIG. 2 are not repeated here.

In some embodiments, S4101, S4102, S4103, and S4104 may be performed in any order or may be performed simultaneously.

In embodiments of the present disclosure, S4101 may be performed independently as an embodiment; S4102 may be performed independently as an embodiment; S4103 may be performed independently as an embodiment; and S4104 may be performed independently as an embodiment.

FIG. 4b is a flowchart of a method for indicating information according to an embodiment of the present disclosure. As shown in FIG. 4b, embodiments of the present disclosure relate to a method for indicating information, performed by a network device. The method includes the following step at S4201.

At S4201, first information is sent,

in which the first information is configured to instruct a terminal to extend or not to extend a first duration, and the first duration is a validity duration of location information acquired by the terminal based on a GNSS.

In some embodiments, the first information is sent to the terminal.

For optional implementations of S4201 reference may be made to the optional implementations of S2103 in FIG. 2, and the other related parts in embodiments involved in FIG. 2 are not repeated here.

In some embodiments, the network may send the first information to an entity besides the terminal.

In some embodiments, the method further includes:
sending second information,
in which the second information is configured to indicate a third time interval.

In some embodiments, durations corresponding to third time intervals indicated by the second information sent at different time points are different.

In some embodiments, sending the second information includes:
sending the second information via at least one of the following signalings:
DCI; or
an MAC CE.

In some embodiments, the method further includes:
sending a first signaling, in which a detection cycle of the first signaling is configured to determine a third time interval.

In some embodiments, the first signaling carries second information, and the second information is configured to indicate the third time interval.

In some embodiments, the method further includes:
sending third information, in which the third information indicates a start time point of the third time interval.

In some embodiments, the method further includes:
sending fourth information, in which an effective time point of the fourth information is configured to determine a start time point of the third time interval.

In some embodiments, the method further includes:
sending fifth information within the third time interval, in which the fifth information is configured to determine a time point to perform a GNSS measurement.

In some embodiments, the method further includes:
receiving sixth information,
in which the sixth information is configured to indicate a capability to keep the terminal in an RRC connected state when it is determined that the first duration expires.

In some embodiments, the method further includes:
sending seventh information,
in which the seventh information is configured to instruct the terminal to keep in the RRC connected state when the terminal determines that the first duration expires.

The above embodiments may be implemented independently or in combination with each other. For optional implementations reference may be made to the optional implementations of steps in FIG. 2, which are not repeated here.

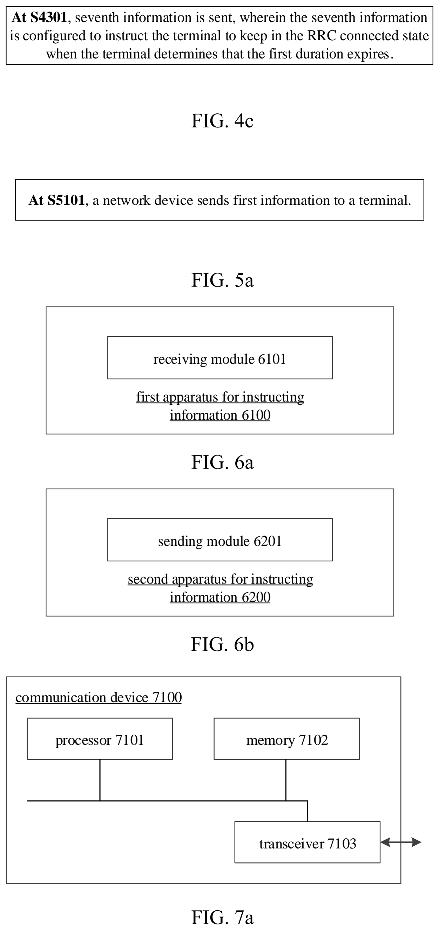

FIG. 4c is a flowchart of a method for indicating information according to an embodiment of the present disclosure. As shown in FIG. 4c, embodiments of the present disclosure relate to a method for indicating information, performed by a network device. The method includes the following step at S4301.

At S4301, seventh information is sent,
in which the seventh information is configured to instruct the terminal to keep in the RRC connected state when the terminal determines that the first duration expires.

In an embodiment, seventh information is sent to a terminal.

For optional implementations of S4301 reference may be made to the optional implementations of S2102 in FIG. 2 and the optional implementations of S4102 in FIG. 4a, and the other related parts in embodiments involved in FIG. 2 and FIG. 4a are not repeated here.

In some implementations, the network may send the seventh information to an entity besides the terminal.

As shown in FIG. 5a, embodiments of the present disclosure relate to a method for indicating information, performed by a system 100 for indicating information. The method includes the following step at S5101.

At S5101, a network device sends first information to a terminal.

In some embodiments, the network device sends the first information, and the terminal receives the first information.

In some embodiments, the first information is configured to instruct the terminal to extend or not to extend a first duration, and the first duration is a validity duration of location information acquired by the terminal based on a GNSS.

For optional implementations of S5101 and S5102 reference may be made to the optional implementations of steps in FIG. 2, FIG. 3a, FIG. 3b, FIG. 3c, FIG. 3d, FIG. 3e, FIG. 4a, FIG. 4b, and FIG. 4c, and the other related parts in embodiments involved in FIG. 2, FIG. 3a, FIG. 3b, FIG. 3c, FIG. 3d, FIG. 3e, FIG. 4a, FIG. 4b, and FIG. 4c are not repeated here.

In some embodiments, the above method may include the method for indicating information in embodiments on a system side, a terminal side, a network device side, etc., which are not repeated here.

Embodiments of the present disclosure relate to a method for indicating information, and the method includes the following.

In some embodiments, the terminal reports indication information, in which the indication information is configured to indicate a capability to maintain a connection even after a GNSS validity duration expires. The GNSS validity duration corresponds to the first validity duration in the present disclosure.

In some embodiments, the terminal determines that the terminal may remain in an RRC connected state when an original GNSS validity duration expires, and a method for determining may include the following.

In some embodiments, the terminal receives indication information from a base station and determines that the terminal may remain in the connected state without entering an IDLE state when the original GNSS validity duration expires.

In some embodiments, the terminal receives configuration information of the GNSS validity duration sent by the base station. If it is determined that a GNSS validity duration indicated in the configuration information is longer than a GNSS validity duration reported by the terminal, it is determined that the GNSS validity duration may be extended.

In some embodiments, the terminal determines an extension duration of the GNSS validity duration, which may be implemented in the following ways.

In some embodiments, a fixed duration is extended.

For this method, after the original GNSS validity duration of the terminal expires, it may be extended for the fixed duration. The fixed duration may be determined by receiving the configuration information of the base station or determined based on a predefined method.

In some embodiments, a variable duration is extended.

For this method, after the original GNSS validity duration of the terminal expires, a time period may be extended. A length of the time period may be dynamically indicated. The terminal may determine configuration information of a time period set by receiving the configuration information of the base station or by determining based on the predefined way. The terminal determines specific time period information that may be extended after the original GNSS validity duration expires based on an explicit method or an implicit method.

In an implementation, the terminal determines the specific extended time period information via a physical layer signaling or a MAC CE sent by the base station.

In another implementation, a corresponding relationship between a target signaling and time period information may be predefined or preconfigured. The terminal determines the time period information to be used based on a detected target signaling and the corresponding relationship. For example, the target signaling may be a signaling configured to indicate a time-frequency domain adjustment command for the terminal, and a corresponding relationship between a detection configuration of the time-frequency adjustment command and the time period information may be predefined or preconfigured. For example, it is predefined that, when a detection cycle of the signaling is 5 ms, an extended time period is time period 1; when a detection cycle of the signaling is 10 ms, an extended time period is time period 2. The terminal determines the extended time period information to be used by detecting the target signaling and the corresponding relationship.

In some embodiments, the terminal determines a start position of an extended duration of the GNSS validity duration, which may be implemented in the following ways.

In some embodiments, it is determined based on a time point when the GNSS validity duration expires.

For this method, the terminal determines the extended duration based on a time point when the GNSS validity duration expires. The start position of the extended duration may be the time point when the GNSS validity duration expires, or may be X subframes after the time point when the GNSS validity duration expires. X is predefined or preconfigured.

In some embodiments, it is determined based on a duration indicated by an extended signaling.

For this method, the terminal determines the extended duration based on the information carried in a target signaling. The target signaling may be a signaling carrying indication information of the extended time period.

In some embodiments, it is determined within a predefined time period or a configurable time period after an effective time point of the extended signaling.

For this method, the terminal determines the start position of the extended duration based on the predefined time period or the configurable time period after the target signaling takes effect. For example, the target signaling may be a signaling carrying the indication information of the extended time period. For example, in an implementation, the terminal takes X subframes after the effective time point of the target signaling as a start position. X is predefined or preconfigured.

In some embodiments, the terminal remains in the RRC connected state during the extended duration. During the extended duration, the terminal may maintain normal communication with the base station. Further, the terminal may receive a trigger instruction from the base station during the extended duration to determine a time point to perform the GNSS measurement.

In embodiments of the present disclosure, some or all steps and their optional implementations may be combined with some or all steps of other embodiments in any combination, or may be combined with optional implementations of other embodiments in any combination.

Embodiments of the present disclosure further provide an apparatus for implementing any one of the above methods. For example, an apparatus is provided, which includes a unit configured to perform steps executed by the terminal in any one of the above methods. For another example, another apparatus is provided, which includes a unit configured to perform steps executed by the network device in any one of the above methods.

It should be understood that the division of units in the above apparatuses is merely a division of logical functions. In actual implementations, the units may be fully or partially integrated into a single physical entity or may be physically separated. In addition, the units in the apparatus may be implemented in the form of a processor invoking software. For example, the apparatus includes a processor, which is connected to a memory for storing computer instructions. The processor invokes the computer instructions stored in the memory to implement any one of the above methods or the functions of the units in the apparatus. The processor may be a general-purpose processor, such as a central processing unit (CPU) or a microprocessor, and the memory may be internal or external to the apparatus. Or, the units in the apparatus may be implemented in the form of a hardware circuit. Some or all of the functions of the units may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units. All units of the above apparatus may be fully implemented in the form of the processor invoking software, or fully implemented in the form of the hardware circuit, or partially implemented in the form of the processor invoking software and the remaining part implemented in the form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigurable. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units. In addition, the hardware circuit may be designed specifically for artificial intelligence and may be understood as an ASIC, such as a neural network processing unit (NPU), a tensor processing unit (TPU), or deep learning processing unit (DPU).

FIG. 6a is a block diagram of a first apparatus for indicating information according to an embodiment of the present disclosure. As shown in FIG. 6a, the first apparatus 6100 for indicating information includes: a receiving module 6101, configured to receive first information, in which the first information is configured to instruct a terminal to extend or not to extend a first duration, and the first duration is a validity duration of location information acquired by the terminal based on a GNSS. Optionally, the receiving module 6101 is configured to perform steps related to the terminal in the method described in the above embodiments, which is not repeated here. Optionally, the first apparatus 6100 for indicating information further includes at least one of a determining module or a sending module. The determining module is configured to perform steps related to determination executed by the terminal 101 in any one of the above methods, and the sending module is configured to perform steps related to sending executed by the terminal 101 in any one of the above methods, which is not repeated here.

FIG. 6b is a block diagram of a second apparatus for indicating information according to an embodiment of the present disclosure. As shown in FIG. 6b, the second apparatus 6200 for indicating information includes: a sending module 6201, configured to send first information, in which the first information is configured to instruct a terminal to extend or not to extend a first duration, and the first duration is a validity duration of location information acquired by the terminal based on a GNSS. Optionally, the sending module 6201 is configured to perform steps related to the network device in the method described in the above embodiments, which is not repeated here. Optionally, the second apparatus 6200 for indicating information further includes at least one of a determining module or a receiving module. The determining module is configured to perform steps related to determination executed by the network 102 in any one of the above methods, and the receiving module is configured to perform steps related to receiving executed by the network 102 in any one of the above methods, which is not repeated here.

FIG. 7a is a block diagram of a communication device 7100 according to an embodiment of the present disclosure. The communication device 7100 may be a network device (e.g., an access network device, a core network device, etc.), a terminal (e.g., a user equipment, etc.), or a chip, a chip system, or a processor that supports the network device to implement any one of the above methods, or a chip, a chip system, or a processor that supports the terminal to implement any one of the above methods. The communication device 7100 may be configured to implement the methods described in the above method embodiments. For details, reference may be made to the descriptions in the above method embodiments.

As shown in FIG. 7a, the communication device 7100 includes one or more processors 7101. The processor 7101 may be a general-purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a DU, or a CU), executing programs, and processing data of the programs. The processor 7101 is configured to invoke instructions to cause the communication device 7100 to implement any one of the above methods.

In some embodiments, the communication device 7100 further includes one or more memories 7102 for storing instructions. Optionally, all or some of the memories 7102 may also be located outside the communication device 7100.

In some embodiments, the communication device 7100 further includes one or more transceivers 7103. When the communication device 7100 includes one or more transceivers 7103, communication steps such as sending and receiving in the above methods are implemented by the transceiver 7103, and other steps are implemented by the processor 7101.

In some embodiments, the transceiver may include a receiver and a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

Optionally, the communication device 7100 further includes one or more interface circuits 7104. The interface circuit 7104 is connected to the memory 7102 and may be used to receive signals from the memory 7102 or other devices, or send signals to the memory 7102 or other devices. For example, the interface circuit 7104 may read instructions stored in the memory 7102 and send the instructions to the processor 7101. The communication device 7100 in the description of the above embodiments may be a network device or a terminal, but the scope of the communication device 7100 described in the disclosure is not limited thereto, and the structure of the communication device 7100 may not be limited by FIG. 8a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

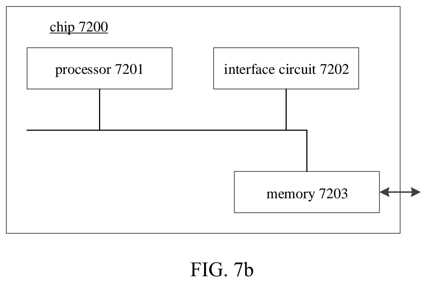

FIG. 7b is a block diagram of a chip 7200 according to an embodiment of the present disclosure. For a case where the communication device 7100 may be a chip or chip system, reference may be made to the block diagram of the chip 7200 shown in FIG. 7b, which is not limited to this. The chip 7200 includes one or more processors 7201, and the processor 7201 is configured to invoke instructions to cause the chip 7200 to implement any one of the above methods.

In some embodiments, the chip 7200 further includes one or more interface circuits 7202. The interface circuit 7202 is connected to a memory 7203 and may be used to receive signals from the memory 7203 or other devices, or send signals to the memory 7203 or other devices. For example, the interface circuit 7202 may read instructions stored in the memory 7203 and send the instructions to the processor 7201. Optionally, terms such as interface circuit, interface, transceiver pin, transceiver, etc. may be used interchangeably. In some embodiments, the chip 7200 further includes one or more memories 7203 for storing instructions. Optionally, all or some of the memories 7203 may be located outside the chip 7200.

The present disclosure also provides a storage medium for storing instructions. When the instructions are running on the communication device 7100, the communication device 7100 is caused to implement any one of the above methods. Optionally, the storage medium is an electronic storage medium. Optionally, the storage medium is a computer-readable storage medium, but it may also be a storage medium readable by other devices. Optionally, the storage medium may be a non-transitory storage medium, but it may also be a transitory storage medium.

The present disclosure also provides a program product. When the program product is executed by the communication device 7100, the communication device 7100 is caused to implement any one of the above methods. Optionally, the program product is a computer program product.

The present disclosure also provides a computer program. When the computer program is executed on a computer, the computer is caused to implement any one of the above methods.

## Claims

1. A method for indicating information, performed by a terminal, comprising:
receiving first information,
wherein the first information is configured to instruct the terminal to extend or not to extend a first duration, and the first duration is a validity duration of location information acquired by the terminal based on a global navigation satellite system (GNSS).

2. The method of claim 1, wherein the first information indicates a second duration, and the method further comprises:
determining that the second duration is longer than the first duration, and extending the first duration.

3. The method of claim 2, wherein extending the first duration comprises:
extending a first time interval corresponding to the first duration to a second time interval,
wherein the second time interval comprises the first time interval and a third time interval.

4. The method of claim 3, wherein the third time interval is predefined or configured by a network device.

5. The method of any one of claims 3 to 4, further comprising:
receiving second information,
wherein the second information is configured to indicate the third time interval.

6. The method of claim 5, wherein durations corresponding to third time intervals indicated by the second information sent at different time points are different.

7. The method of claim 5 or 6, further comprising:
determining the third time interval based on a first value in the second information and a mapping relationship between the first value and a time interval.

8. The method of any one of claims 3 to 4, further comprising:
receiving a first signaling; and
determining the third time interval based on a detection cycle of the first signaling and a mapping relationship between the detection cycle and a time interval.

9. The method of claim 8, wherein the first signaling carries second information, and the second information is configured to indicate the third time interval.

10. The method of any one of claims 7 to 9, wherein the mapping relationship is predefined or configured by the network device.

11. The method of any one of claims 5 to 7, wherein receiving the second information comprises:
receiving the second information via at least one of the following signalings:
downlink control information (DCI); or a media access control control element (MAC CE).

12. The method of any one of claims 3 to 11, further comprising:
determining a start time point of the third time interval.

13. The method of claim 12, wherein determining the start time point of the third time interval comprises:
determining the start time point based on an expiration time point at which the first duration expires.

14. The method of claim 13, wherein determining the start time point based on the expiration time point at which the first duration expires comprises:
determining the start time point as the expiration time point;
or
determining the start time point as a time point after a first period from the expiration time point.

15. The method of claim 14, wherein the first period is predefined or configured by a network device.

16. The method of claim 12, further comprising:
receiving third information, the third information indicating the start time point,
wherein determining the start time point of the third time interval comprises:
determining the start time point of the third time interval based on the third information.

17. The method of claim 12, further comprising:
receiving fourth information; and
determining the start time point of the third time interval based on an effective time point of the fourth information.

18. The method of claim 17, wherein determining the start time point of the third time interval based on the effective time point of the fourth information comprises:
determining the start time point as a time point after a second period from the effective time point.

19. The method of claim 18, wherein the second period is predefined or configured by a network device.

20. The method of claim 3, further comprising:
receiving fifth information within the third time interval; and
determining a time point to perform a global navigation satellite system (GNSS) measurement based on the fifth information.

21. The method of any one of claims 1 to 20, further comprising:
sending sixth information,
wherein the sixth information is configured to indicate a capability to keep the terminal in a radio resource control (RRC) connected state when it is determined that the first duration expires.

22. The method of any one of claims 1 to 21, further comprising:
determining that the first duration expires, and keeping the terminal in an RRC connected state.

23. The method of claim 22, further comprising:
receiving seventh information,
wherein the seventh information is configured to instruct the terminal to keep in the RRC connected state when the terminal determines that the first duration expires.

24. A method for indicating information, performed by a network device, comprising:
sending first information,
wherein the first information is configured to instruct a terminal to extend or not to extend a first duration, and the first duration is a validity duration of location information acquired by the terminal based on a global navigation satellite system (GNSS).

25. The method of claim 24, further comprising:
sending second information,
wherein the second information is configured to indicate a third time interval.

26. The method of claim 25, wherein durations corresponding to third time intervals indicated by the second information sent at different time points are different.

27. The method of claim 25 or 26, wherein sending the second information comprises:
sending the second information via at least one of the following signalings:
downlink control information (DCI); or
a media access control control element (MAC CE).

28. The method of claim 24, further comprising:
sending a first signaling, wherein a detection cycle of the first signaling is configured to determine a third time interval.

29. The method of claim 28, wherein the first signaling carries second information, and the second information is configured to indicate the third time interval.

30. The method of any one of claims 1 to 29, further comprising:
sending third information, wherein the third information indicates a start time point of the third time interval.

31. The method of any one of claims 1 to 29, further comprising:
sending fourth information, wherein an effective time point of the fourth information is configured to determine a start time point of the third time interval.

32. The method of any one of claims 1 to 29, further comprising:
sending fifth information within the third time interval, wherein the fifth information is configured to determine a time point to perform a global navigation satellite system (GNSS) measurement.

33. The method of any one of claims 1 to 29, further comprising:
receiving sixth information,
wherein the sixth information is configured to indicate a capability to keep the terminal in a radio resource control (RRC) connected state when it is determined that the first duration expires.

34. The method of claim 33, further comprising:
sending seventh information,
wherein the seventh information is configured to instruct the terminal to keep in the RRC connected state when the terminal determines that the first duration expires.

35. A method for indicating information, performed by a communication system, comprising:
sending, by a network device, first information to a terminal,
wherein the first information is configured to instruct the terminal to extend or not to extend a first duration, and the first duration is a validity duration of location information acquired by the terminal based on a global navigation satellite system (GNSS).

36. A first apparatus for indicating information, comprising:
a receiving module, configured to receive first information,
wherein the first information is configured to instruct a terminal to extend or not to extend a first duration, and the first duration is a validity duration of location information acquired by the terminal based on a global navigation satellite system (GNSS).

37. A second apparatus for indicating information, comprising:
a sending module, configured to send first information,
wherein the first information is configured to instruct a terminal to extend or not to extend a first duration, and the first duration is a validity duration of location information acquired by the terminal based on a global navigation satellite system (GNSS).

38. A system for indicating information, comprising a terminal and a network device, wherein the terminal is configured to implement the method for indicating information of any one of claims 1 to 22, and the network device is configured to implement the method for indicating information of any one of claims 23 to 32.

39. A communication device, comprising:
one or more processors,
wherein the processors are configured to invoke instructions to cause the communication device to implement the method for indicating information of any one of claims 1 to 23, or the method for indicating information of any one of claims 24 to 34.

40. A storage medium for storing instructions, wherein when the instructions are running on a communication device, the communication device is caused to implement the method for indicating information of any one of claims 1 to 23, or the method for indicating information of any one of claims 24 to 34.
